# EUROPEAN PATENT APPLICATION

(11) **EP 2 835 950 A2**
(43) Date of publication of application: **11.02.2015**
(21) Application number: 14179652.4
(22) Date of filing: 04.08.2014
(51) Int. Cl.: H04L 29/06, H04L 12/46

(54) **Access control method, access control system and access control device**

(30) Priority: 09.08.2013 JP 2013166779
(71) Applicant: FUJITSU LIMITED, Kawasaki-shi, Kanagawa 211-8588 (JP)
(72) Inventor: Sone, Tomoyuki, Kanagawa, 211-8588 (JP); Matoba, Kazumine, Kanagawa, 211-8588 (JP)
(74) Representative: Hoffmann Eitle

(57) **Abstract**

A management terminal belonging to a first network periodically receives a registration request of information of a communication terminal belonging to a second network from a gateway device belonging to the second network. A control device belonging to the first network receives a communication request that a communication path be secured between the management terminal and the communication terminal from the management terminal. The control device includes the communication request in a latest response to a registration request received from the gateway device periodically and transmits the communication request to the gateway device. The gateway device permits an access to the communication terminal from the management terminal via a tunnel formed in response to the communication request.

## Description

### FIELD

The embodiments discussed herein are related to an access control method.

### BACKGROUND

Devices that can perform communications with a different device may sometimes be provided in a hub of a company. Examples of these devices are a printer, a sensor, an air conditioner, etc, all of which have communication devices. These communication devices are included in a data network protected by securities such as a firewall or the like. Accordingly, a firewall prevents direct accesses to these communication devices from an external environment.

As a method of accessing a communication device from a remote environment, Secure Socket Layer-Virtual Private Network (SSL-VPN) is used. SSL-VPN is a technique that provides a virtual network using an SSL for encryption between hubs.

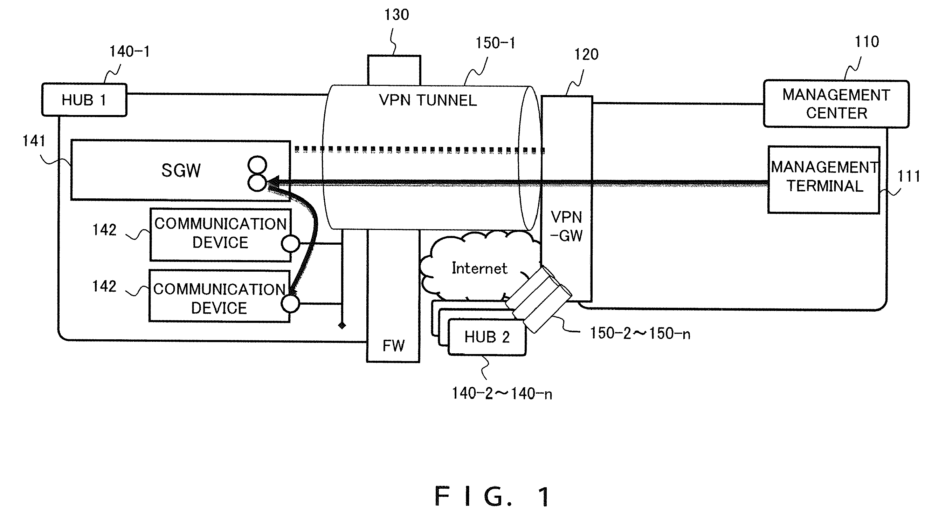

FIG. 1 illustrates an example of a method of accessing a hub from a management terminal by using SSL-VPN. A management center 110 is provided with a management terminal 111 and a Virtual Private Network Gateway (VPN-GW) 120. The management terminal 111 is a terminal used when devices in a hub 1 (140-1) are managed. The VPN-GW 120 is a gateway device used when a hub 140 is accessed by the management terminal 111 by using SSL-VPN. The network of the hub 1 is protected by a firewall 130 and includes a Service Gateway (SGW) 141, a communication device 142a, and a communication device 142b. For example, when a user attempts to access the communication device 142b directly from the management terminal 111, the access is blocked by the firewall 130. In an access method using SSL-VPN for avoiding the firewall 130, a VPN tunnel 150 is provided beforehand between the SGW 141 and the VPN-GW 120. The provision of the VPN tunnel 150 makes it possible for the management terminal 111 to avoid the blockage by the firewall 130. When a user desires to access the communication device 142b, the management terminal 111 accesses the SGW 141 using a route through the VPN tunnel 150. Thereafter, the management terminal 111 accesses the communication device 142b via the SGW 141. Also, a plurality of hubs such as hub 1 (140-1) through hub 2 (140-n) may exist, and VPN tunnels 150-1 through 150-n are provided in accordance with the number of hubs. Communication devices may be servers or personal computers (PCs).

As an access method for avoiding a firewall, a technique as below is known. A first gateway operates at a low operation ratio for a client having access information for the first gateway, and an instruction that connection be made through a second gateway, which is arranged closer to the client, is transmitted. The first and second gateways exchange information with each other, and thus the client can access a particular server without performing setting changes for using the second gateway (See Patent Document 1 for example).

### Patent Documents

Patent Document 1: Japanese National Publication of International Patent Application No. 2012-519416

### SUMMARY

An object in one aspect of the present invention is to form a VPN tunnel in accordance with accesses to a communication terminal of the hub from the management terminal.

According to an aspect of the embodiments, a management terminal belonging to a first network periodically receives a registration request of information of a communication terminal belonging to a second network from a gateway device belonging to the second network. A control device belonging to the first network receives a communication request that a communication path be secured between the management terminal and the communication terminal from the management terminal. The control device includes the communication request in a latest response to a registration request received from the gateway device periodically and transmits the communication request to the gateway device. The gateway device permits an access to the communication terminal from the management terminal via a tunnel formed in response to the communication request.

### BRIEF DESCRIPTION OF DRAWINGS

FIG. 1 illustrates an example of a method of accessing a hub from a management terminal by using SSL-VPN;
FIG. 2 explains an example of a method of forming a VPN tunnel;
FIG. 3 is a sequence diagram explaining an example of a process of a method of forming a VPN tunnel according to a first embodiment;
FIG. 4A is a sequence diagram explaining an example of a process related to a periodic request transmitted from the SGW;
FIG. 4B is a sequence diagram explaining an example of a process related to a periodic request transmitted from the SGW;
FIG. 5 is a sequence diagram explaining an example of deletion of device information in a case when a communication device has been removed;
FIG. 6 illustrates an example of a hardware configuration of a management terminal, a GW control device, a VPN-GW, and an SGW;
FIG. 7A is a flowchart explaining an example of a process of device registration;
FIG. 7B is a flowchart explaining an example of a process of device registration;
FIG. 8A is a flowchart that explains an example of a process of forming a VPN tunnel;
FIG. 8B is a flowchart that explains an example of a process of forming a VPN tunnel;
FIG. 9A is a flowchart that explains an example of a deletion process of registered device information;
FIG. 9B is a flowchart that explains an example of a deletion process of registered device information;
FIG. 10A is a sequence diagram explaining an example of a process of a request signal using a GW control device;
FIG. 10B is a sequence diagram explaining an example of a process of a request signal using a GW control device;
FIG. 11 is a sequence diagram explaining an example of a process of a forming method of a VPN tunnel according to a second embodiment.

### DESCRIPTION OF EMBODIMENTS

Hereinafter, the present embodiment will be explained by referring to the drawings.

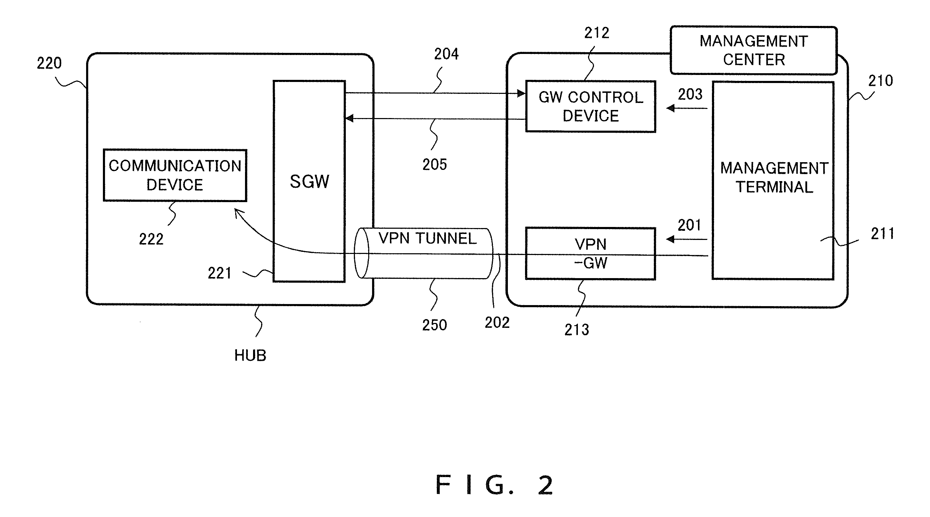

FIG. 2 explains an example of a method of forming a VPN tunnel. A management center 210 is a network that includes a management terminal 211, a GW control device 212, and a VPN-GW 213. A hub 220 is a network that includes an SGW 221 and a communication device 222. The processes in which a VPN tunnel is formed from the management center side and the management terminal 211 accesses the communication device 222 will be explained sequentially.
(1) The management terminal 211 accesses the VPN-GW 213 in order to access the communication device 222 (arrow 201).
(2) When a VPN tunnel 250 has already been formed between the management terminal 221 and the VPN-GW 213, the management terminal 211 can access the communication device 222 by using the VPN that has already been formed (arrow 202).
(3) When the VPN tunnel 250 has not been formed yet, the management terminal 211 outputs, to the GW control device 212, a request signal including a request that the VPN tunnel 250 be formed (arrow 203).
(4) The GW control device 212 receives a periodic request signal transmitted from the SGW 221 (arrow 204). The periodic request signal is a signal transmitted for registering, in the management center side, the information of the communication device 222 provided in a hub. Thereby, it is possible to obtain, on the management center side, information related to the communication device 222 that is provided in a hub.
(5) As a response to a received request signal, the GW control device 212 returns, to the SGW 221, a response signal, which includes a request signal including a request that the VPN tunnel 250 be formed, an encryption key, and a certificate (arrow 205). The response signal is a signal used in response to a request signal.
(6) Having received a response signal, the SGW 221 forms the VPN tunnel 250 between the SGW 221 and the VPN-GW 213.
(7) The management terminal 211 can access the communication device 222 (arrow 202).

The request signal in (4) is, for example, an HTTP request. The response signal of (5) is an HTTP response to an HTTP request. When the request of (4) does not exist and a request signal requesting that the VPN tunnel of (5) be formed has been reported, a signal from the GW control device is blocked by a firewall, and it is not possible to form a VPN tunnel. Accordingly, in (5), the blockage by a firewall is avoided by adding a request that a VPN tunnel be formed to a response signal to a request signal from the SGW 221. A VPN tunnel is formed in accordance with an access to a communication device in a hub from the management terminal by using the method of forming a VPN method as described in (1) through (7). VPN-GW 213 is a starting point of VPN tunnel is formed.

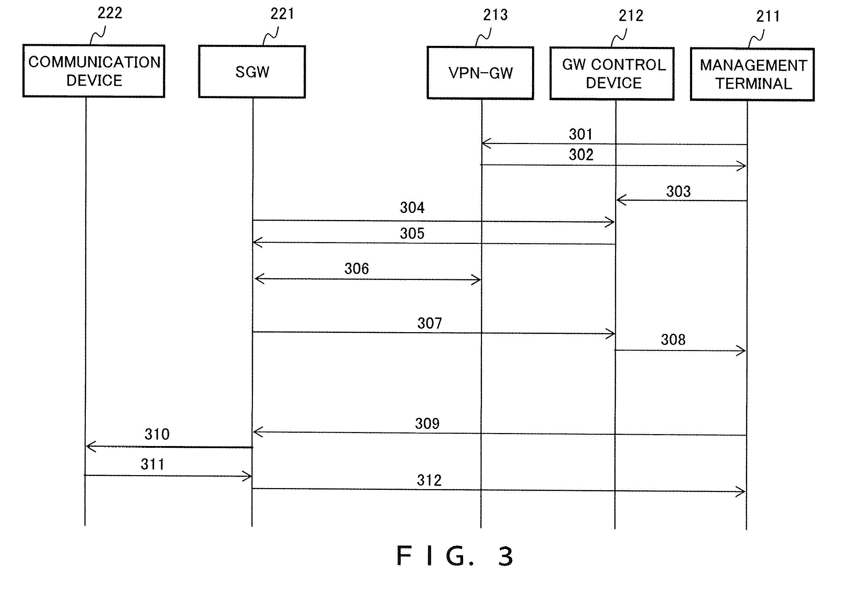

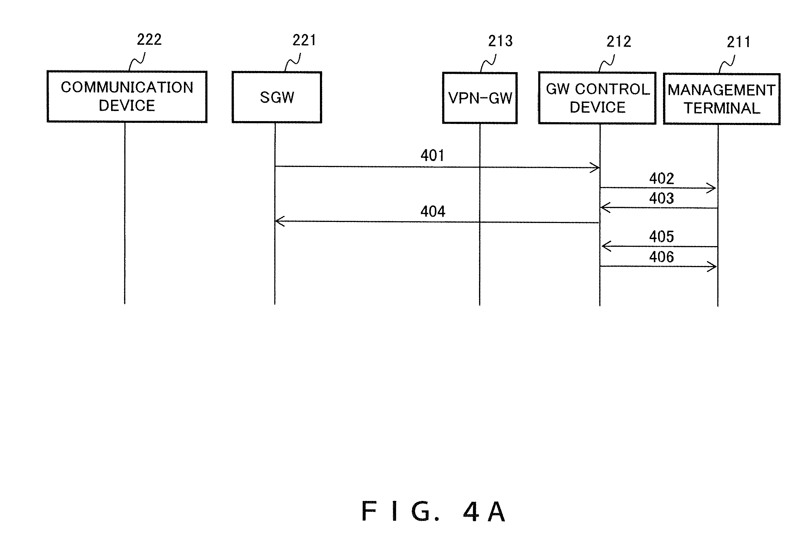

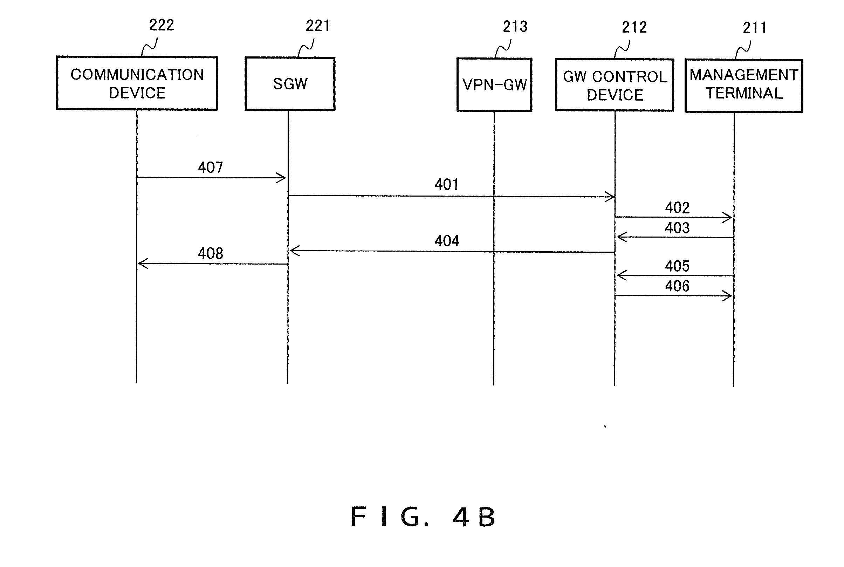

FIG. 3 is a sequence diagram explaining an example of a process of a method of forming a VPN tunnel according to the first embodiment. The same devices as those in FIG. 2 are denoted by the same numerals. The management terminal 211 accesses the VPN-GW 213 in order to access the communication device 222 (arrow 301). When a VPN tunnel has not been formed, the VPN-GW 213 reports to the management terminal 211 that a VPN tunnel has not been formed (arrow 302). The management terminal 211 transmits to the GW control device 212 a request signal requesting that a VPN tunnel be formed (arrow 303). The request signal includes the ID and the address of the communication device 222 that the management terminal 211 desires to access. The SGW 221 transmits a periodic request signal to the GW control device 212 (arrow 304). A periodic request signal will be described later in FIGs. 4. The GW control device 212 adds, to a response signal to a request signal from the SGW 221, a request that a VPN tunnel be formed and information used for forming the VPN tunnel, and reports it to the SGW 221 (arrow 305). Information used for forming a VPN tunnel includes an encryption key of the VPN-GW 213, a certificate, IP information, the ID and the address of the communication device 222 that the management terminal 211 desires to access, the ID of the GW to be formed in the communication device 222, or the like. Also, the GW control device 212 assigns the IP address corresponding to a Network Interface Card (NIC) on the SGW side to a VPN tunnel. The SGW 221 uses information received from the GW control device 212, and forms a VPN tunnel between the SGW 221 and the VPN-GW 213 (arrow 306). When a VPN tunnel has been formed, the SGW 221 reports the completion of the forming to the GW control device 212 (arrow 307). The GW control device 212 reports the formation of a VPN tunnel to the management terminal 211 (arrow 308). The management terminal 211 reports a control message for manipulating the communication device 222 to the SGW 221 via the VPN tunnel (arrow 309). The control message includes manipulation information, an ID, and address information for controlling the communication device 222. The SGW 221 performs address conversion by using schemes such as Network Address Translation (NAT) or Network Address Port Translation (NAPT), and outputs a control signal to the communication device 222 (arrow 310). The communication device 222 executes a process of the received control signal, and reports the completion to the SGW 221 (arrow 311). The SGW 221 reports the completion of the process of the communication device 222 to the management terminal 211 (arrow 312). In the forming method of a VPN tunnel according to the first embodiment, a VPN tunnel is formed in response to an access from the management terminal to a communication device in a hub.

FIGs. 4 are sequence diagrams explaining an example of a process related to a periodic request transmitted from an SGW. The same members as those in FIG. 3 are denoted by the same numerals. A periodic request signal is a signal transmitted for registering, in the management center side, information of the communication device 222 provided in a hub. One communication device may exist or a plurality of communication devices may exist. A response signal is a registration completion signal in response to a request signal for registering a communication device. FIG. 4A is a sequence diagram for explaining an example of a process related to a periodic request. The SGW 221 transmits to the GW control device 212 a request signal for registering, in the management center side, information related to all stored devices (arrow 401). The GW control device 212 stores information related to a received device, and makes the management terminal 211 hold the ID information of the device (arrow 402). The management terminal 211 reports to the SGW 221 the storage of the ID information of the device (arrow 403). The GW control device 212 returns, to the SGW 221, the fact that the information related to the device has been stored as a response signal to a request signal (arrow 404). The management terminal 211 requests, from the GW control device 212, an address corresponding to a stored device ID (arrow 405) The GW control device 212 reports, to the management terminal 211, the address corresponding to the device ID (arrow 406).

The request signal denoted by arrow 401 may be transmitted from the SGW periodically at timings that can be changed by a user. A periodic request signal is transmitted to the GW control device 212 from the SGW 221, and thereby information related to a device is registered on the management center side automatically even in an environment where IP addresses of devices are changed dynamically. Also, the SGW 221 has stored IP addresses of devices that have been changed dynamically. Because information related to a device is registered on the management center side automatically, it is not necessary for a user to know information of a device beforehand. The ID information of a device is ID information and the MAC address of the device, etc. A request signal from the SGW 221 includes the address, the ID of a device and the ID of a GW. The ID of a GW is the ID of a VPN-GW used for forming a VPN tunnel.

FIG. 4B is a sequence diagram that explains a process related to a request signal in a case when a communication device has been added newly. When a communication device has been added newly to a hub, information related to the added device is registered in the SGW and the management center side. The SGW may detect the newly added device and the newly added device may report that it has started the participation in the network newly. When the communication device 222 has been added to a network, the communication device 222 reports, to the communication device 222, the ID information of a device that has been added newly to a hub (arrow 407). The SGW 221 assigns an IP address to the newly added device, and stores information in which the ID of the newly added device and the IP address are associated. The SGW 221 transmits to the GW control device 212 a request signal for registering device information related to all stored devices in the management center side (arrow 401) . The GW control device 212 stores information related to the received device, and makes the management terminal 211 hold the ID information of the device (arrow 402). The management terminal 211 reports to the SGW 221 that the ID information of the device has been stored (arrow 403). The GW control device 212 returns, to the SGW 221, the fact that the information related to the device has been stored as a response signal to a request signal (arrow 404). The management terminal 211 requests, from the GW control device 212, an address corresponding to a stored device ID (arrow 405). The GW control device 212 reports, to the management terminal 211, the address corresponding to the device ID (arrow 406). The SGW 221 reports the completion of the registration of the information related to the device to the communication device 222 (arrow 408).

It has not been possible for the management center side to recognize an addition or removal of a device on the hub side. However, by performing communications as illustrated in FIG. 4B, information related to a device that has been added newly is registered on the management center side automatically. Also, users do not have to make inquires in order to know information of devices.

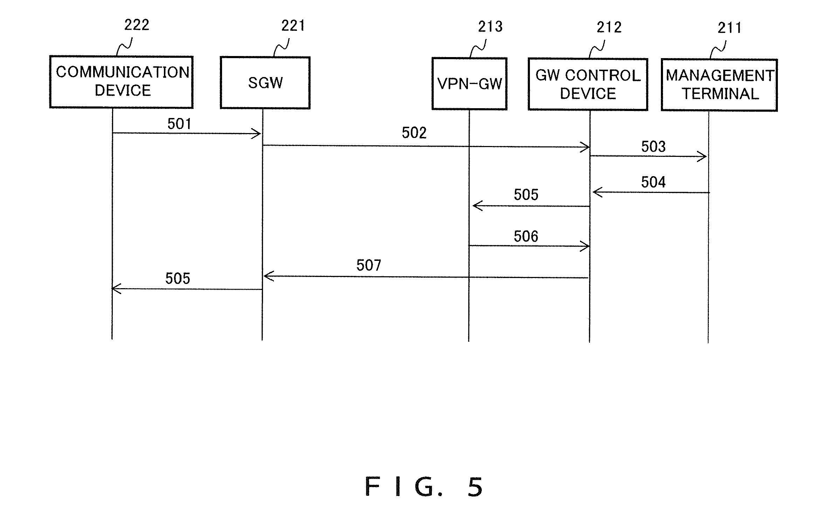

FIG. 5 is a sequence diagram explaining an example of deletion of device information in a case when a communication device has been removed. The same members as those in FIG. 3 are denoted by the same numbers. Deletion of device information is a process for deleting device information registered at the management center side. When a device has been removed, the communication device 222 reports to the SGW 221 a request that device information be deleted (arrow 501). The SGW 221 deletes the information related to the registered communication device 222, and transmits, to the GW control device 212, a request signal including an instruction to delete the information related to the communication device 222 (arrow 502). The GW control device 212 deletes information related to the registered communication device 222 and transmits to the GW control device 212 an instruction to delete information related to the communication device 222 (arrow 503). The management terminal 211 reports the completion of the deletion process to the GW control device 212 (arrow 504) . When a VPN tunnel has been formed as a communication path used by the management terminal 211 to access the communication device 222, the GW control device 212 reports to the VPN-GW 213 an instruction to disconnect the VPN tunnel (arrow 505). The GW control device 212 receives from the VPN-GW 213 a report indicating the completion of the disconnection of the VPN tunnel (arrow 506). The GW control device 212 reports the completion of the deletion to the SGW 221 (arrow 507). The SGW 221 reports the completion of the deletion to the communication device 222 (arrow 508).

As described above, information of a device that is not to be used anymore is deleted from the management terminal 211. In an environment where a VPN tunnel is disconnected by a time out or the like, the processes corresponding to the arrows 505 or 506 do not have to be executed. Also, in the arrow 505, when a VPN tunnel is being used for accesses with a plurality of communication devices, the GW control device outputs an instruction to disconnect a VPN tunnel when the management terminal 211 deletes all communication devices. When a VPN tunnel is being used for accesses with a plurality of communication devices and the management terminal deletes information related to one communication device, a VPN tunnel is not disconnected.

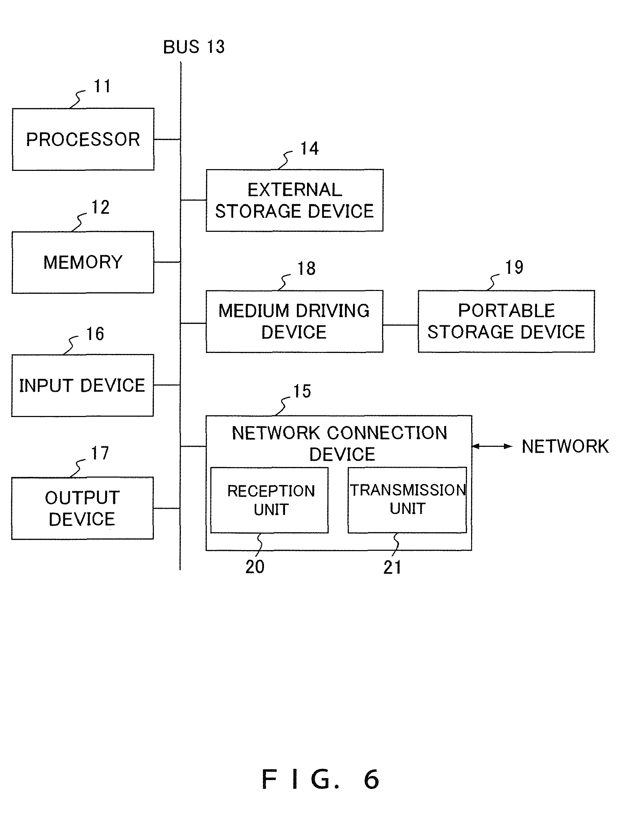

FIG. 6 illustrates an example of a hardware configuration of the management terminal, the GW control device, the VPN-GW, and the SGW. The management terminal 211, the GW control device 212, the VPN-GW 213, and the 221 include a processor 11, a memory 12, a bus 13, an external storage device 14, and a network connection device 15. Optionally, the management terminal 211, the GW control device 212, the VPN-GW 213, and the SGW 221 may include an input device 16, an output device 17, and a medium driving device 18. The management terminal 211, the GW control device 212, the VPN-GW 213, and the SGW 221 may sometimes be implemented by, for example, a computer.

The processor 11 may be an arbitrary processing circuit that includes a Central Processing Unit (CPU). The processor 11 executes respective processes that are performed by the management terminal 211, the GW control device 212, the VPN-GW 213, and the SGW 221. Also, the processor 11 may execute a program stored in for example the external storage device 14. The memory 12 operates as a storage area, and stores data obtained as a result of operations of the processor 11 and data used for processes by the processor 11 on an as-needed basis. The network connection device 15 is used for performing communications with a different device, and includes a transmission unit 21 and a reception unit 20 for receiving a signal.

The input device 16 is implemented as for example a button, a keyboard, a mouse, etc., and the output device 17 is implemented as a display device, etc. The bus 13 connects the processor 11, the memory 12, the input device 16, the output device 17, the external storage device 14, the medium driving device 18, and the network connection device 15 so that data can be transmitted and received between them. The external storage device 14 stores a program, data, etc., and provides stored information to the processor 11 or the like on an as-needed basis. The medium driving device 18 may output data of the memory 12 and the external storage device 14 to a transportable storage medium 19, and may read a program, data, etc., from the storage medium 19. In this example, the storage medium 19 may be an arbitrary portable storage medium including a floppy disk, a Magneto-Optical (MO) disk, a Compact Disc Recordable (CD-R), or a Digital Versatile Disk Recordable (DVD-R).

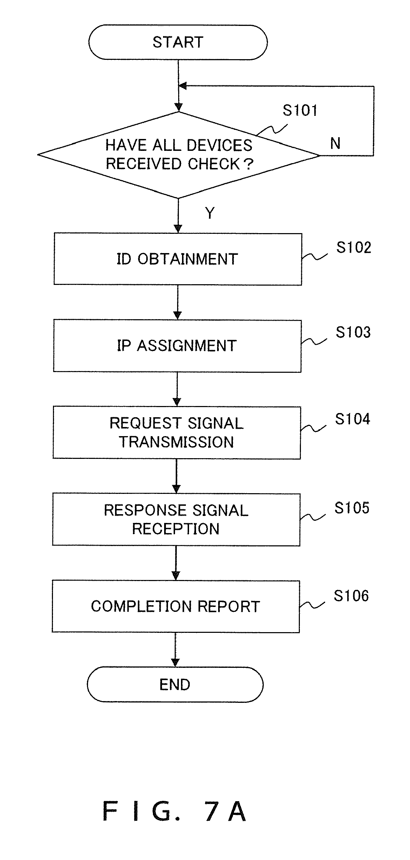

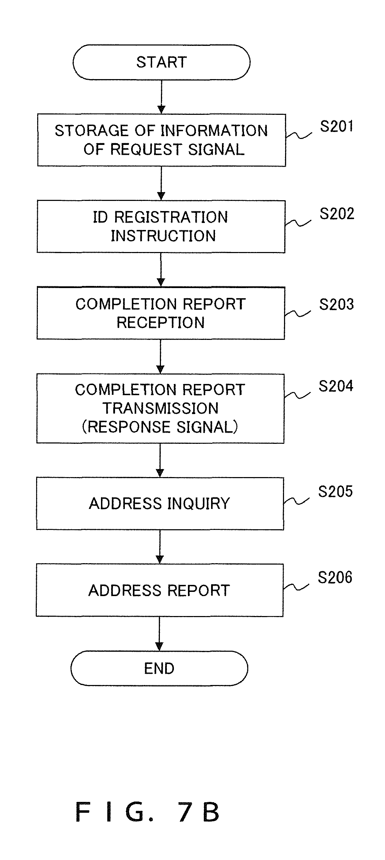

FIGs. 7 are flowcharts explaining examples of processes of device registration. FIG. 7A is a flowchart explaining an example of a process of an SGW related to device registration. The SGW 221 checks whether or not there is a device that has been added newly or whether there is a communication device that has received changing, and determines whether or not all devices have received this check (step S101). When not all communication devices have received the check, S101 is repeated. When there is a device that has been added newly or that received changing, the SGW 221 obtains the ID information of the device (step S102 and YES in step S101). The SGW 221 assigns an IP address to a newly-added/changed device, and stores information in which the ID of a newly-added/changed device and an IP address are associated (step S103). The SGW 221 transmits to the GW control device 212 a request signal for registering, in the management center side, all of the stored pieces of device information related to devices (step S104). The SGW 221 receives a response signal that reports that the information included in a request signal has been registered on the management center side (step S105). The SGW 221 reports the completion of the registration to the communication device (step S106), and the SGW 221 terminates the process.

FIG. 7B explains a flowchart that explains an example of a process of a GW control device related to device registration. When receiving a request signal, the GW control device 212 stores information included in the request signal (step S201; corresponds to the request signal in step S104 in FIG. 6A). The GW control device 212 outputs an instruction to store ID information of added/changed device in the management terminal 211 (step S202). The GW control device 212 receives a report of the completion of the registration of the ID of the device (step S203) from the management terminal 211. The GW control device 212 returns, to the SGW 221, the fact that the information related to the device has been stored as a response signal to a request signal (step S204). The GW control device 212 receives a request signal of address information corresponding to the device ID stored in the management terminal 211 (step S205). The GW control device 212 transmits to the management terminal 211 the requested address information related to the device from the management terminal 211 (step S206). In an environment where the SGW 221 does not detect an addition of a communication device, the process in step S101 is skipped. The processes related to a periodic request signal correspond to steps S104 through 105 and steps S201 through 206 in FIGs. 7.

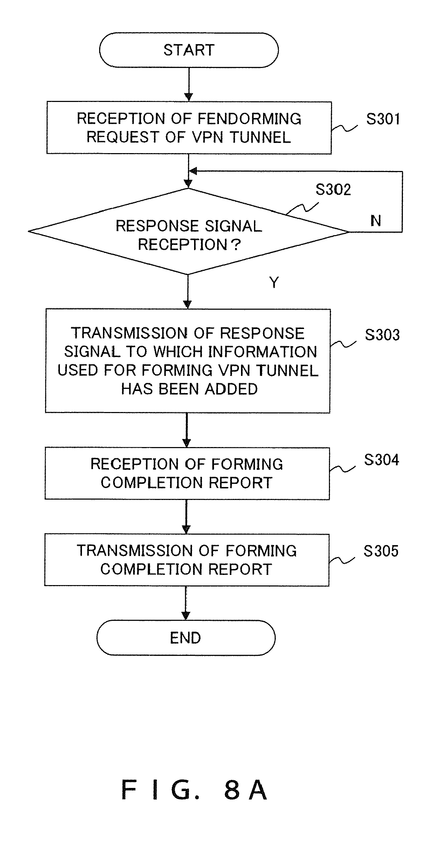

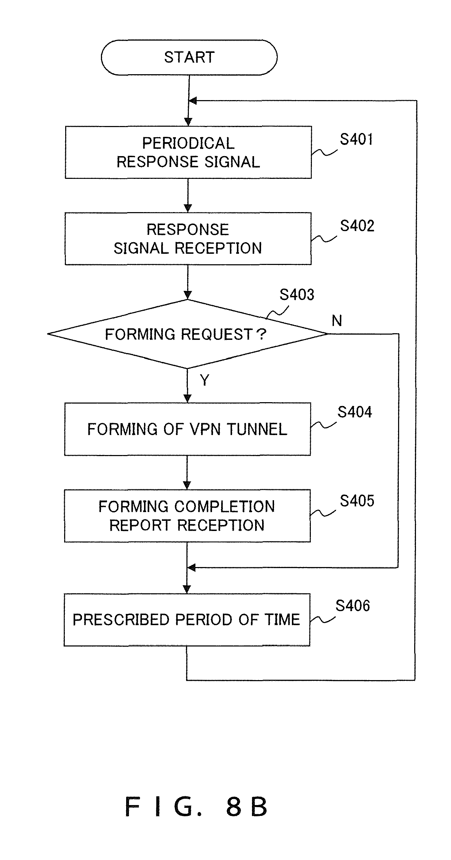

FIGs. 8 are flowcharts that explain examples of processes of forming a VPN tunnel. FIG. 8A is a flowchart that explains an example of a process performed by a GW control device related to the forming of a VPN tunnel. The GW control device 212 receives from the management terminal 211 a request signal that requests that a VPN tunnel be formed (step S301). The GW control device 212 determines whether or not a request signal has been received from an SGW (step S302). When a request signal has not been received, S302 is repeated. The GW control device 212 transmits, to the SGW 221, a response signal to which the encryption key/certificate/IP information of the VPN-GW 213 and the ID and address of the communication device 222 for which an access by the SGW 221 is desired have been added (step S303). The GW control device 212 receives a report of the completion of the forming of the VPN tunnel from the SGW 221 (step S304). The GW control device 212 transmits the report of the completion of the forming of the VPN tunnel to the management terminal 211 (step S305).

FIG. 8B is a flowchart that explains an example of a process, by an SGW, related to the forming of a VPN tunnel. The SGW 221 transmits a periodic request signal to the GW control device 212 (step S401). The SGW 221 receives a response signal corresponding to a request signal (step S402). The SGW 221 determines whether or not a response signal includes a request that a VPN tunnel be formed (step S403). The SGW 221 forms a VPN tunnel between the SGW 221 and the VPN-GW 213 by using information such as the encryption key, the certificate, and the GW-ID received from the GW control device 212 (step S404 and YES in step S403). The SGW 221 reports the completion of the forming of the VPN tunnel to the GW control device 212 (step S405). The SGW 221 waits for a prescribed period of time (step S406 and NO in step S403). The SGW 221 repeats the processes from step S401 after waiting for a prescribed period of time.

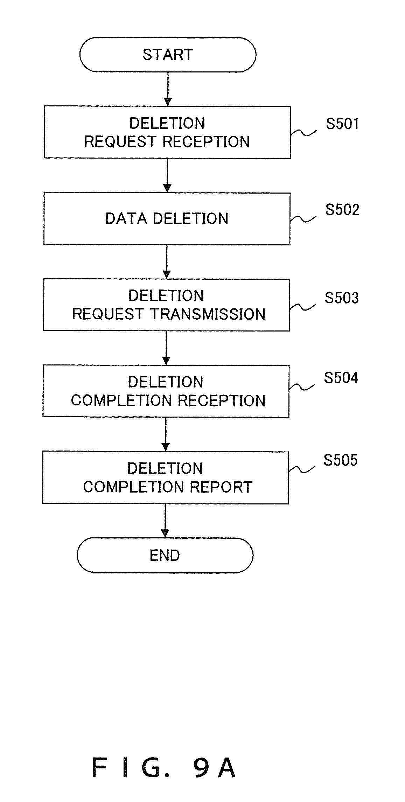

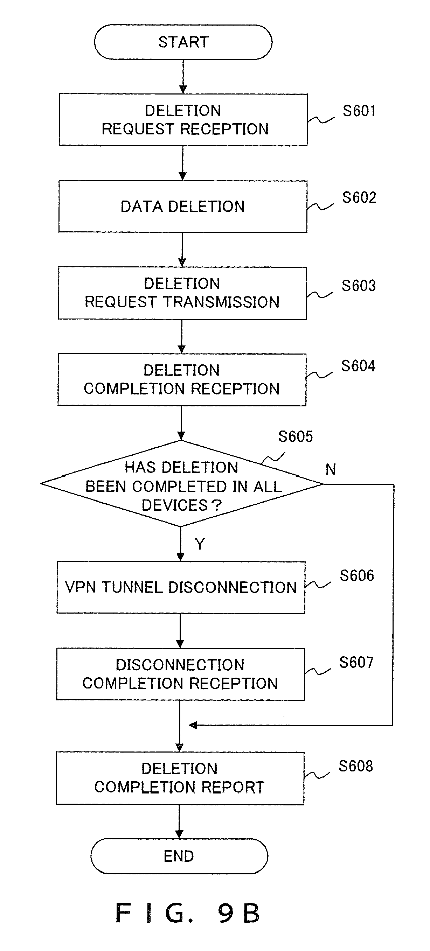

FIGs. 9 are flowcharts that explain an example of a deletion process of registered device information. FIG. 9A is a flowchart that explains an example of a process, by an SGW, related to the deletion of registered device information. The SGW 221 receives from the communication device 222 a deletion request and the ID information of the device to be deleted (step S501). The SGW 221 deletes information related to the communication device 222 that has been registered (step S502) . The SGW 221 reports to the GW control device 212 a deletion instruction and the ID information of the device to be deleted (Step S503). The SGW 221 receives a report of the completion of the deletion process from the GW control device 212 (step S504). The SGW 221 reports the completion of the deletion process to the communication device 222 (step S505). The SGW 221 terminates the process.

FIG. 9B is a flowchart that explains an example of a process, by a GW control device, related to the deletion of registered device information. The GW control device 212 receives, from the SGW 221, a deletion instruction and the ID information of a deletion target device (step S601). The GW control device 212 deletes information related to the communication device 222 that has been registered (step S602). The GW control device 212 transmits to the management terminal 211 an instruction to delete information related to the communication device 222 (step S603). The GW control device 212 receives information indicating the completion of the deletion process from the management terminal 211 (step S604). The GW control device 212 determines whether or not all pieces of information related to a device in a hub in which the SGW 221 is arranged are to be deleted (step S605). When all pieces of information related to a device in a hub are to be deleted, the GW control device 212 makes the VPN-GW 213 disconnect the VPN tunnel (step S606 and YES in step S605). The GW control device 212 receives from the VPN-GW 213 a report that a VPN tunnel has been disconnected (step S607). The GW control device 212 reports the completion of the deletion process to the SGW 221 (step S608 and NO in step S605). The GW control device 212 terminates the process.

As described above, in the methods according to the embodiments, a VPN tunnel is formed in accordance with an access to a communication device in a hub from a management terminal. Also, information on a device that has been added/removed in a hub is reported to the management side and is registered.

### <Others>

Also, the embodiments are not limited to the above, and various modifications are allowed. Examples thereof will be described below.

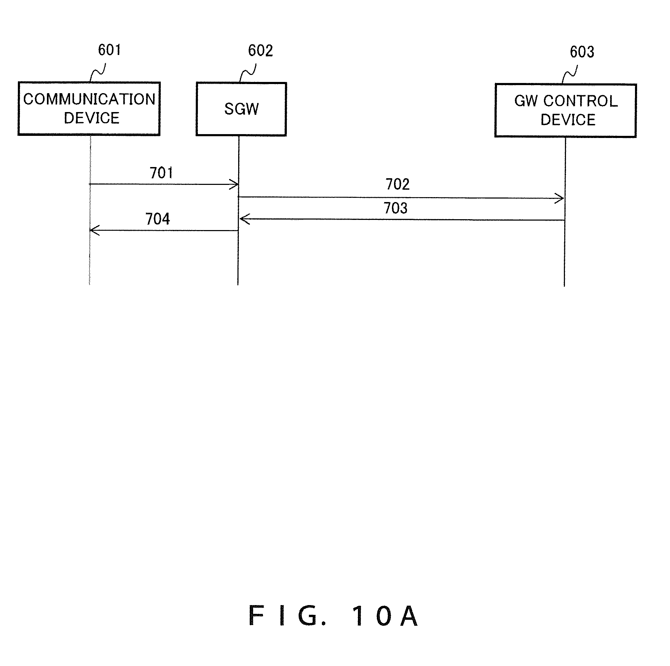

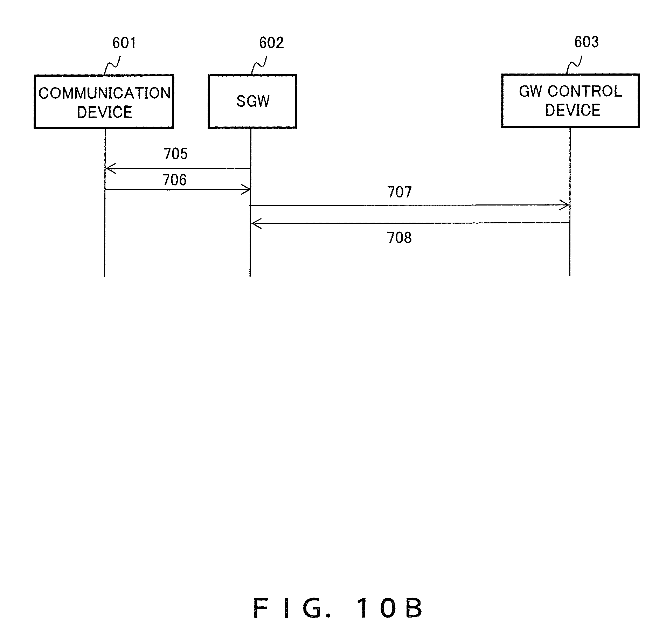

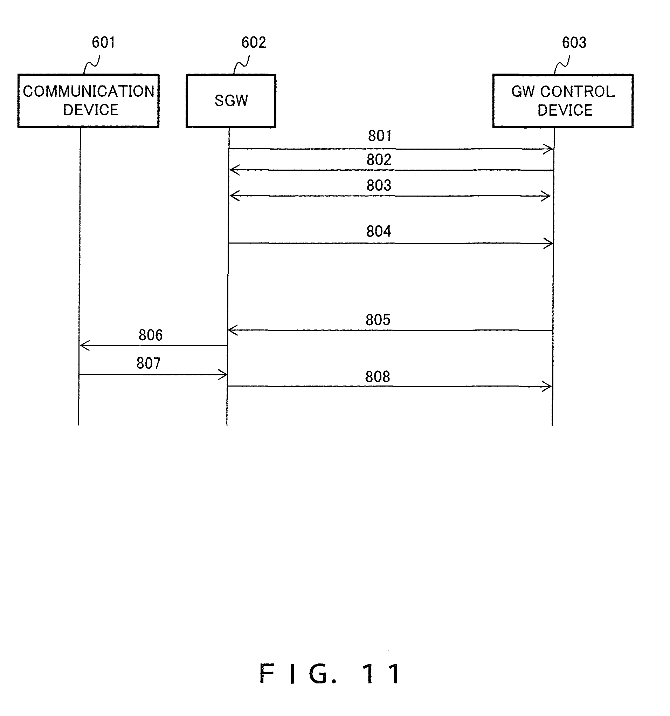

The management terminal, the GW control device, and the VPN-GW may form an integrated environment by using a virtual server. In FIG. 10 and FIG. 11, a device that obtained by integrating the management terminal, the GW control device, and the VPN-GW is simply referred to as a GW control device.

FIGs. 10 are sequence diagrams explaining an example of a process that uses a control device and that is related to a request. FIG. 10A is a sequence diagram for explaining an example of a process of a request signal in the addition of a device. When a communication device 601 has participated in a network, the communication device 601 reports, to an SGW 602, the ID information of the device that has been newly added to a hub (arrow 701). The SGW 602 assigns an IP address to the newly added device, and stores information in which the ID of the added device and the IP address are associated. The SGW 602 transmits to a GW control device 603 a request signal for registering device information related to all stored devices on the management center side (arrow 702). The GW control device 603 stores the received information related to the device, and returns to the SGW 602 the fact that the information related to the device has been stored (arrow 703). The SGW 602 reports the completion of the registration of the information related to the device (arrow 704).

FIG. 10B is a sequence diagram explaining an example of a process of a request signal for adding a device from the SGW. In an environment where the SGW detects a device that has been newly added, the SGW may assign an ID and an IP address to a communication device. When the SGW 602 has detected that the communication device 601 participated in a network, the SGW 602 assigns an ID and an address to the communication device 601. The SGW 602 reports to the communication device 601 the ID that has been assigned to the communication device 601 (arrow 705) . The communication device 601 stores the reported ID, and returns to the SGW 602 the fact that the ID has been stored (arrow 706) . The SGW 602 transmits, to the GW control device 603, a request signal for registering, on the management center side, all pieces of device information related to stored devices (arrow 707). The GW control device 603 stores the received information that is related to a device, and returns, to the SGW 602 and as a response signal to the request signal, the fact that the information related to the device has been stored (arrow 708) .

FIG. 11 is a sequence diagram explaining an example of a process of a forming method of a VPN tunnel according to a second embodiment. The same members as those in FIG. 9 are denoted by the same numerals. The SGW 602 transmits a periodic request signal to the GW control device 603 (arrow 801). When there is a request that a communication path to the SGW 602 be secured, the GW control device 603 adds to a response signal to a sequential signal from the SGW 602 the request that a VPN tunnel be formed and information used for forming a VPN tunnel, and reports the signal to the SGW 602 (arrow 802). The communication request is instructed to be given as a result of, for example, manipulations by a user. Information used for forming a VPN tunnel includes an encryption key, a certificate, IP information, an ID/address of a communication device to be accessed, the ID of the GW, etc. The SGW 602 uses information received from the GW control device 603 so as to form a VPN tunnel between the SGW 602 and the GW control device 603 (arrow 803). When a VPN tunnel has been formed, the SGW 602 reports the completion of the forming to the GW control device 603 (arrow 804). The GW control device 603 reports, to the SGW 602 and via the VPN tunnel, a control message for manipulating the communication device 601 (arrow 805). The SGW 602 performs address conversion by using schemes such as NAT, NAPT, etc., and outputs a control signal to the communication device 601 (arrow 806). The communication device 601 executes the process of the received control signal, and reports the completion to the SGW 602 (arrow 807). The SGW 602 reports the completion of the process by the 601 to the GW control device 603 (arrow 808). Also in the forming method of a VPN tunnel according to the second embodiment, a user can form a VPN tunnel in accordance with an access to a communication device in a hub from the GW control device.

## Claims

1. An access control method that controls an access between a first network (210) and a second network (220), the method comprising:
periodically receiving by a management terminal(211) belonging to the first network (210), a registration request of information related to a communication terminal (222) belonging to the second network (220) from a gateway device (221) belonging to the second network (220),
including by a control device (212) belonging to the first network (210), a communication request that a communication path be secured between the management terminal(211) and the communication terminal(222) in a latest response to a registration request received from the gateway device(221) periodically when a communication request that a communication path be secured between the management terminal(211) and the communication terminal(222) has been received from the management terminal(211), and transmitting the communication request to the gateway device(221), and
permitting by the gateway device(221) an access to the communication terminal (222) from the management terminal (211) via a tunnel formed in response to the communication request.

2. The access control method according to claim 1, further comprising:
receiving, by the control device(212), the registration request including identification information of the communication terminal(222) reported at prescribed time intervals; and
reporting, by the control device (212) to the management terminal(211), information of all of the communication terminals(222) belonging to the second network (220) by reporting the identification information to the management terminal (211).

3. The access control method according to claim 1 or 2, further comprising:
selecting by the control device (212), an encryption key and certificate data used for forming the tunnel when the registration request has been received; and
generating by the control device(212), the response message in which a forming request of the tunnel including the selected encryption key and certification data.

4. An access control system that controls an access between a first network(210) and a second network (220), comprising:
a communication terminal (222) that belongs to the second network (220) ;
a gateway device(221) that belongs to the second network (220);
a management terminal(211) that belongs to the first network (210) and that periodically receives, from the gateway device (221), a registration request of information related to the communication terminal(222); and
a control device(212) that belongs to the first network (210), wherein:
the control device (212) includes a communication request that a communication path be secured between the management terminal(211) and the communication terminal(222) in a latest response to a registration request received from the gateway device(221) periodically when a communication request that a communication path be secured between the management terminal(211) and the communication terminal(222) has been received from the management terminal (211), and transmits the communication request to the gateway device(221), and
the gateway device(221) permits an access to the communication terminal (222) from the management terminal (211) via a tunnel formed in response to the communication request.

5. The access control system according to claim 4, wherein:
the control device(212) receives the registration request including identification information of the communication terminal(222) reported at prescribed time intervals; and
the control device (212) reports, to the management terminal(211), information of all of the communication terminals(222) belonging to the second network (220) by reporting the identification information to the management terminal (211).

6. The access control system according to claim 4, wherein:
the control device(212):
selects an encryption key and certificate data used for forming the tunnel when the registration request has been received; and
generates the response message in which a forming request of the tunnel includes the selected encryption key and certification data.

7. An access control device(212) that controls an access between a first network(210) and a second network (220), comprising:
a processor configured to execute a process related to the access control, wherein:
the processor:
receives, from the management terminal(211), a communication request that a communication path be secured between a management terminal(211) belonging to the first network(210) and a communication terminal (222) belonging to the second network (220);
includes the communication request in a latest response that corresponds to a registration request of information related to the communication terminal(222) periodically transmitted to the management terminal (211) from a gateway device (221) belonging to the second network (220), and transmits the communication request to the gateway device (221); and
makes the gateway device(221) permit an access to the communication terminal(222) from the management terminal(211) via a tunnel formed in response to the communication request.

8. The access control device(212) according to claim 7, wherein:
the control device(212):
selects an encryption key and certificate data used for forming the tunnel when the registration request has been received; and
generates the response message in which a forming request of the tunnel includes the selected encryption key and certification data.
